# EUROPEAN PATENT APPLICATION

(11) **EP 1 873 991 A1**
(43) Date of publication of application: **02.01.2008**
(21) Application number: 06116361.4
(22) Date of filing: 29.06.2006
(51) Int. Cl.: H04L 29/06

(54) **System and method for securely communicating with a server**

(71) Applicant: Research In Motion Limited, Waterloo, Ontario N2L 3W8 (CA)
(72) Inventor: Brown, Michael S, Waterloo Ontario N2K 4B1 (CA); Brown, Michael K, Kitchener Ontario N2M 2Z2 (CA); Kirkup, Michael G., Waterloo, Ontario N2J 4Y3 (CA)
(74) Representative: Rickard, David John

(57) **Abstract**

A system and method for securely communicating with a destination server over a network in accordance with a protocol that, at least optionally, provides client authentication. The system comprises a client and an intermediate server that is adapted to establish a secure connection with the destination server on behalf of the client. When the destination server requires a digital signature that has been generated using a private key associated with the client in order to authenticate the client, the intermediate server provides the client with the data to be signed using the private key. If the client returns the requisite digital signature to the intermediate server, then the intermediate server will transmit the digital signature to the destination server.

## Description

Embodiments described herein relate generally to data communications between computing devices, and more specifically to a system and method for securely communicating with a server in accordance with a protocol capable of providing client authentication.

There is often a need to secure data that is sent between applications across an untrusted network. A secure communications protocol such as the Transport Layer Security (TLS) protocol, for example, may be used to encrypt data transmitted between servers and clients to provide confidentiality. TLS is a protocol based on public key cryptography, and is application-independent. TLS is widely recognized as a protocol used for the secure HyperText Transfer Protocol (HTTPS) for Internet transactions between browsers and web servers. However, TLS may also be used for other application-level protocols.

TLS also authenticates servers and clients to prove the identities of parties engaged in secure communication. In the establishment of a TLS connection, the server typically always authenticates its identity to the client. However, the client may not need to authenticate with the server, depending on the application. If the application does require mutual authentication, then at some point in the establishment of the connection, the client will need to authenticate itself by producing a digital signature generated with a private key.

TLS is a communication-intensive protocol, and many message exchanges between the parties (e.g. client/server) are generally required in order to establish a secure connection. Accordingly, under certain circumstances, it may be desirable for a client to employ an intermediate server (e.g. a proxy server) to establish a TLS connection on its behalf. If an intermediate server is employed, a problem may arise when the client is required to authenticate itself to the server. For example, there may be a problem if the intermediate server does not possess or otherwise have access to the private key needed to generate the requisite digital signature.

To address this problem, the intermediate server may be provided with the private key of a user of the computing device upon which the client resides. This would allow the intermediate server to sign data on behalf of the client, and in particular, generate the digital signature required for client authentication. However, by providing the intermediate server with a user's private key, the user may lose control over when and how the user's private key is used. This can represent an unacceptable security risk for some users.

In one broad aspect, there is preferably provided a system for securely communicating with a first server over a network in accordance with a protocol, wherein the protocol provides authentication of clients that are to engage in secure communication with the first server, the system comprising: a client residing on a computing device, wherein a private key is associated with the client; a second server coupled to the computing device on which the client resides; wherein the second server is adapted to establish a secure connection with the first server in accordance with the protocol such that, in operation, when the first server requires a digital signature that has been generated using the private key associated with the client in order to authenticate the client, the second server requests the digital signature from the client wherein the second server provides the client with data to be signed using the private key, and transmits the digital signature to the first server if the client returns the digital signature generated using the private key to the second server.

In another broad aspect, there is preferably provided an apparatus for securely communicating with a server over a network in accordance with a protocol, wherein the protocol provides authentication of clients that are to engage in secure communication with the server, and wherein: the apparatus is coupled to a computing device on which a client resides, wherein a private key is associated with the client; the apparatus is adapted to establish a secure connection with the server in accordance with the protocol such that, in operation, when the server requires a digital signature that has been generated using the private key associated with the client in order to authenticate the client, the apparatus requests the digital signature from the client wherein the apparatus provides the client with data to be signed using the private key, and transmits the digital signature to the server if the client returns the digital signature generated using the private key to the apparatus.

In another broad aspect, there is preferably provided a device for securely communicating with a first server over a network in accordance with a protocol, wherein the protocol provides authentication of clients that are to engage in secure communication with the first server, and wherein: a client resides on the device, wherein a private key is associated with the client; a second server is coupled to the device, wherein the second server is adapted to establish a secure connection with the first server in accordance with the protocol such that, in operation, when the first server requires a digital signature that has been generated using the private key associated with the client in order to authenticate the client, the second server requests the digital signature from the client wherein the second server provides the client with data to be signed using the private key, and transmits the digital signature to the first server if the client returns the digital signature generated using the private key to the second server.

A method of securely communicating with a first server over a network in accordance with a protocol, wherein the protocol preferably provides authentication of clients that are to engage in secure communication with the first server, and wherein a client residing on a computing device and a second server coupled to the computing device on which the client resides co-operate to perform the steps of the method, the method comprising: the second server initiating establishment of a secure connection with the first server in accordance with the protocol; the second server establishing the secure connection with the first server in accordance with the protocol such that, in operation, when the first server requires a digital signature that has been generated using a private key associated with the client in order to authenticate the client, the second server performs steps comprising requesting the digital signature from the client wherein the second server provides the client with data to be signed using the private key, and transmitting the digital signature to the first server if the client returns the digital signature generated using the private key to the second server.

### Brief Description of the Drawings

For a better understanding of embodiments described herein, and to show more clearly how they may be carried into effect, reference will now be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a block diagram illustrating components of a host system in one example configuration;
FIGS. 5A and 5B are block diagrams illustrating example client/server system configurations;
FIG. 6 is a flow diagram illustrating the flow of messages in a full handshake in accordance with a TLS protocol; and
FIG. 7 is a flowchart illustrating the steps of a method of securely communicating with a server over a network in accordance with a protocol providing client authentication, in at least one embodiment.

### Description of Preferred Embodiments

Embodiments described herein relate generally to a system and method for securely communicating with a first server over a network via a second server, in accordance with a protocol that, at least optionally, provides client authentication. More specifically, there is provided a system and method in which the second server is adapted to establish a secure connection with the first server on behalf of a client that resides on a computing device, and in which a user of the computing device is able to retain control over the use of the user's private key.

In one broad aspect, there is preferably provided a system for securely communicating with a first server over a network in accordance with a protocol, wherein the protocol provides authentication of clients that are to engage in secure communication with the first server, the system comprising: a client residing on a computing device, wherein a private key is associated with the client; a second server coupled to the computing device on which the client resides; wherein the second server is adapted to establish a secure connection with the first server in accordance with the protocol such that, in operation, when the first server requires a digital signature that has been generated using the private key associated with the client in order to authenticate the client, the second server requests the digital signature from the client wherein the second server provides the client with data to be signed using the private key, and transmits the digital signature to the first server if the client returns the digital signature generated using the private key to the second server.

In another broad aspect, there is preferably provided an apparatus for securely communicating with a server over a network in accordance with a protocol, wherein the protocol provides authentication of clients that are to engage in secure communication with the server, and wherein: the apparatus is coupled to a computing device on which a client resides, wherein a private key is associated with the client; the apparatus is adapted to establish a secure connection with the server in accordance with the protocol such that, in operation, when the server requires a digital signature that has been generated using the private key associated with the client in order to authenticate the client, the apparatus requests the digital signature from the client wherein the apparatus provides the client with data to be signed using the private key, and transmits the digital signature to the server if the client returns the digital signature generated using the private key to the apparatus.

In another broad aspect, there is preferably provided a device for securely communicating with a first server over a network in accordance with a protocol, wherein the protocol provides authentication of clients that are to engage in secure communication with the first server, and wherein: a client resides on the device, wherein a private key is associated with the client; a second server is coupled to the device, wherein the second server is adapted to establish a secure connection with the first server in accordance with the protocol such that, in operation, when the first server requires a digital signature that has been generated using the private key associated with the client in order to authenticate the client, the second server requests the digital signature from the client wherein the second server provides the client with data to be signed using the private key, and transmits the digital signature to the first server if the client returns the digital signature generated using the private key to the second server.

A method of securely communicating with a first server over a network in accordance with a protocol, wherein the protocol preferably provides authentication of clients that are to engage in secure communication with the first server, and wherein a client residing on a computing device and a second server coupled to the computing device on which the client resides co-operate to perform the steps of the method, the method comprising: the second server initiating establishment of a secure connection with the first server in accordance with the protocol; the second server establishing the secure connection with the first server in accordance with the protocol such that, in operation, when the first server requires a digital signature that has been generated using a private key associated with the client in order to authenticate the client, the second server performs steps comprising requesting the digital signature from the client wherein the second server provides the client with data to be signed using the private key, and transmitting the digital signature to the first server if the client returns the digital signature generated using the private key to the second server.

These and other aspects and features of various embodiments will be described in greater detail below.

Some embodiments of the systems and methods described herein make reference to a mobile device. A mobile device is a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

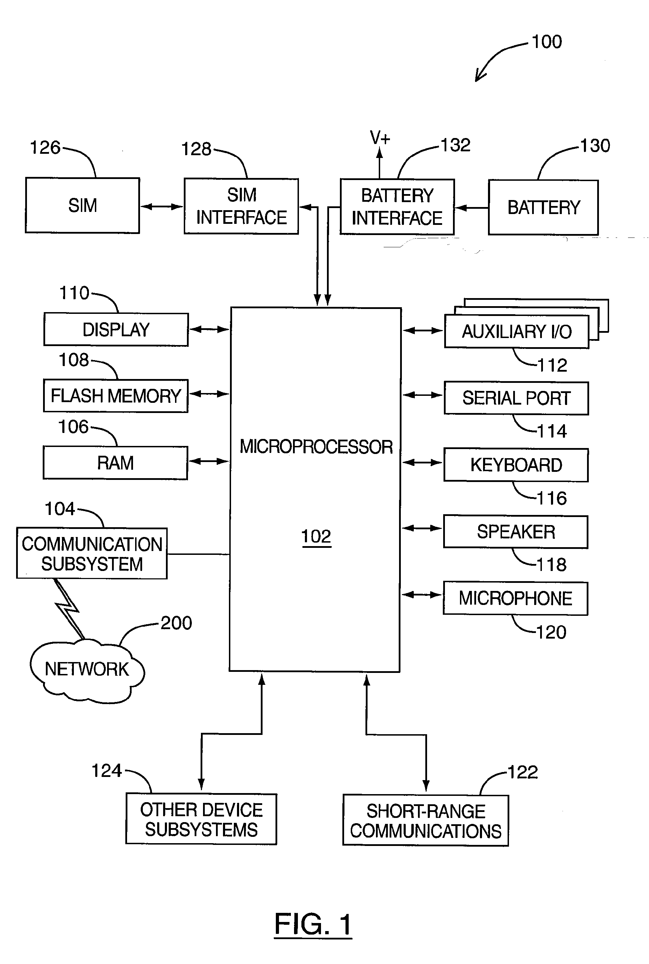

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Other network communication technologies that may be employed include, for example, Integrated Digital Enhanced Network (iDEN^{™}), Evolution-Data Optimized (EV-DO), and High Speed Downlink Packet Access (HSDPA).

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

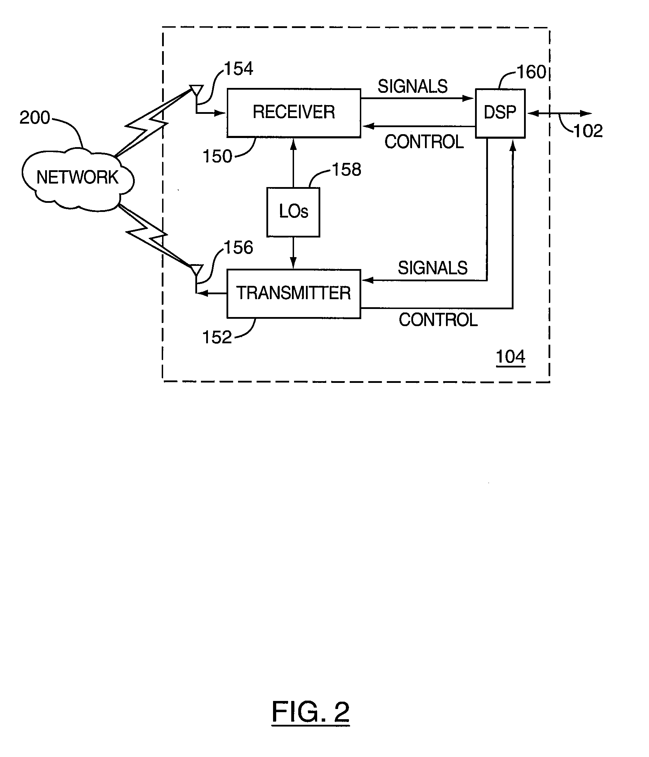

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

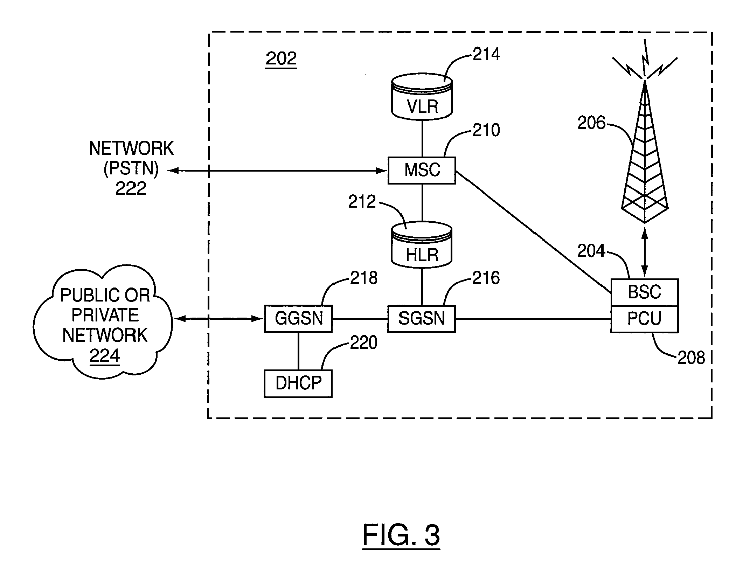

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and may store the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

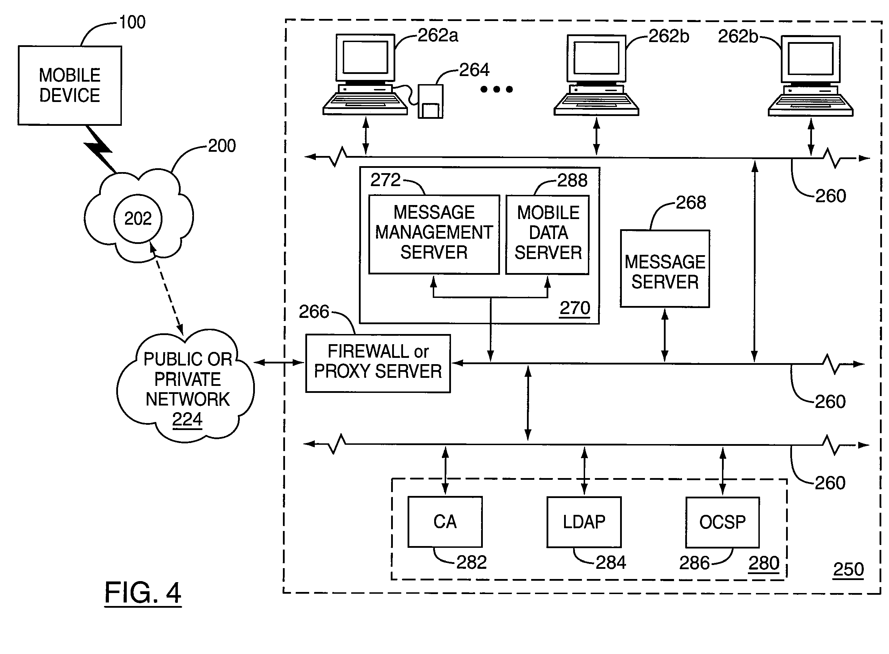

Referring now to FIG. 4, a block diagram illustrating components of a host system in one example configuration is shown. Host system 250 will typically be a corporate office or other local area network (LAN), but may instead be a home office computer or some other private system, for example, in variant implementations. In this example shown in FIG. 4, host system 250 is depicted as a LAN of an organization to which a user of mobile device 100 belongs.

LAN 250 comprises a number of network components connected to each other by LAN connections 260. For instance, a user's desktop computing device ("desktop computer") 262a with an accompanying cradle 264 for the user's mobile device 100 is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include certificates or encryption keys used in the exchange of messages. The process of downloading information from a user's desktop computer 262a to the user's mobile device 100 may also be referred to as synchronization.

It will be understood by persons skilled in the art that user computers 262a, 262b will typically be also connected to other peripheral devices not explicitly shown in FIG. 4. Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocol will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection would preferably be a Transmission Control Protocol (TCP)/IP or User Datagram Protocol (UDP)/IP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange^{™} Server. In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages would then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 are automatically redirected to mobile device 100 as they are received by message server 268.

To facilitate the wireless communication of messages and message-related data between mobile device 100 and components of LAN 250, a number of wireless communications support components 270 may be provided. In this example implementation, wireless communications support components 270 comprise a message management server 272, for example. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with a security policy/information technology department policy or "IT Policy") and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices need to be supported.

While Simple Mail Transfer Protocol (SMTP), RFC822 headers, and Multipurpose Internet Mail Extensions (MIME) body parts may be used to define the format of a typical e-mail message not requiring encoding, Secure/MIME (S/MIME), a version of the MIME protocol, may be used in the communication of encoded messages (i.e. in secure messaging applications). S/MIME enables end-to-end authentication and confidentiality, and provides data integrity and privacy from the time an originator of a message sends a message until it is decoded and read by the message recipient. Other standards and protocols may be employed to facilitate secure message communication, such as Pretty Good Privacy^{™} (PGP) and variants of PGP such as OpenPGP, for example. It will be understood that where reference is generally made to "PGP" herein, the term is intended to encompass any of a number of variant implementations based on the more general PGP scheme.

Secure messaging protocols such as S/MIME and PGP-based protocols rely on public and private encryption keys to provide confidentiality and integrity. Data encoded using a private key of a private key/public key pair can only be decoded using the corresponding public key of the pair, and data encoded using a public key of a private key/public key pair can only be decoded using the corresponding private key of the pair. It is intended that private key information never be made public, whereas public key information is shared.

For example, if a sender wishes to send a message to a recipient in encrypted form, the recipient's public key is used to encrypt a message, which can then be decrypted only using the recipient's private key. Alternatively, in some encoding techniques, a one-time session key is generated and used to encrypt the body of a message, typically with a symmetric encryption technique (e.g. Triple DES). The session key is then encrypted using the recipient's public key (e.g. with a public key encryption algorithm such as Rivest, Shamir, and Adleman ("RSA")), which can then be decrypted only using the recipient's private key. The decrypted session key can then be used to decrypt the message body. The message header may be used to specify the particular encryption scheme that must be used to decrypt the message. Other encryption techniques based on public key cryptography may be used in variant implementations. However, in each of these cases, only the recipient's private key may be used to facilitate successful decryption of the message, and in this way, the confidentiality of messages can be maintained.

As a further example, a sender may sign a message using a digital signature. A digital signature is a digest of the message (e.g. a hash of the message) encoded using the sender's private key, which can then be appended to the outgoing message. To verify the digital signature of the message when received, the recipient uses the same technique as the sender (e.g. using the same standard hash algorithm) to obtain a digest of the received message. The recipient also uses the sender's public key to decode the digital signature, in order to obtain what should be a matching digest for the received message. If the digests of the received message do not match, this suggests that either the message content was changed during transport and/or the message did not originate from the sender whose public key was used for verification. Digital signature algorithms are designed in such a way that only someone with knowledge of the sender's private key should be able to encode a signature that the recipient will decode correctly using the sender's public key. Therefore, by verifying a digital signature in this way, authentication of the sender and message integrity can be maintained.

An encoded message may be encrypted, signed, or both encrypted and signed. In S/MIME, the authenticity of public keys used in these operations is validated using certificates. A certificate is a digital document issued by a certificate authority (CA). Certificates are used to authenticate the association between users and their public keys, and essentially, provides a level of trust in the authenticity of the users' public keys. Certificates contain information about the certificate holder, with certificate contents typically formatted in accordance with an accepted standard (e.g. X.509). The certificates are typically digitally signed by the certificate authority.

For a public key to be trusted, its issuing organization (i.e. the CA) must be trusted. Large certificate authorities such as Verisign or Entrust, for example, are typically regarded as trusted. Other certificate authorities may be designated as trusted by a user. The relationship between a trusted CA and a user's public key can be represented by a series of related certificates, also referred to as a certificate chain.

In PGP-based systems, a PGP key is used, which is like an S/MIME certificate in that it contains public information including a public key and information on the key holder or owner. Unlike S/MIME certificates, however, PGP keys are not generally issued by a certificate authority, and the level of trust in the authenticity of a PGP key typically requires verifying that a trusted individual has vouched for the authenticity of a given PGP key.

Standard e-mail security protocols typically facilitate secure message transmission between non-mobile computing devices (e.g. computers 262a, 262b of FIG. 4; remote desktop devices). In order that signed messages received from senders may be read from mobile device 100 and that encrypted messages be sent from mobile device 100, mobile device 100 is adapted to store public keys (e.g. in S/MIME certificates, PGP keys) of other individuals. Keys stored on a user's computer 262a will typically be downloaded from computer 262a to mobile device 100 through cradle 264, for example.

Mobile device 100 may also be adapted to store the private key of the public key/private key pair associated with the user, so that the user of mobile device 100 can sign outgoing messages composed on mobile device 100, and decrypt messages sent to the user encrypted with the user's public key. The private key may be downloaded to mobile device 100 from the user's computer 262a through cradle 264, for example. The private key is preferably exchanged between the computer 262a and mobile device 100 so that the user may share one identity and one method for accessing messages.

User computers 262a, 262b can obtain S/MIME certificates and PGP keys from a number of sources, for storage on computers 262a, 262b and/or mobile devices (e.g. mobile device 100) in a key store, for example. The sources of these certificate and keys may be private (e.g. dedicated for use within an organization) or public, may reside locally or remotely, and may be accessible from within an organization's private network or through the Internet, for example. In the example shown in FIG. 4, multiple public key infrastructure (PKI) servers 280 associated with the organization reside on LAN 250. PKI servers 280 include a CA server 282 that may be used for issuing S/MIME certificates, a Lightweight Directory Access Protocol (LDAP) server 284 that may be used to search for and download S/MIME certificates and/or PGP keys (e.g. for individuals within the organization), and an Online Certificate Status Protocol (OCSP) server 286 that may be used to verify the revocation status of S/MIME certificates, for example.

Certificates and/or PGP keys may be retrieved from LDAP server 284 by a user computer 262a, for example, to be downloaded to mobile device 100 via cradle 264. However, in a variant implementation, LDAP server 284 may be accessed directly (i.e. "over the air" in this context) by mobile device 100, and mobile device 100 may search for and retrieve individual certificates and PGP keys through a mobile data server 288. Similarly, mobile data server 288 may be adapted to allow mobile device 100 to directly query OCSP server 286 to verify the revocation status of S/MIME certificates.

In variant implementations, only selected PKI servers 280 may be made accessible to mobile devices (e.g. allowing certificates to be downloaded only from a user's computer 262a, 262b, while allowing the revocation status of certificates to be checked from mobile device 100).

In variant implementations, certain PKI servers 280 may be made accessible only to mobile devices registered to particular users, as specified by an IT administrator, possibly in accordance with an IT policy, for example.

Other sources of S/MIME certificates and PGP keys [not shown] may include a Windows certificate or key store, another secure certificate or key store on or outside LAN 250, and smart cards, for example.

Applications of public key cryptography are not limited to those related to the transmission of e-mail messages between computing devices.
More generally, there is often a need to secure data that is sent between applications across an untrusted network. Secure communications protocols such as the Transport Layer Security (TLS) protocol, the Secure Sockets Layer (SSL) protocol, and the Private Communications Transport protocol (PCT), for example, are based on public key cryptography.

While a number of embodiments are described herein with reference to TLS, other protocols other than TLS may be employed in variant embodiments. Use of the TLS protocol is becoming increasingly common, and TLS is widely used to provide confidentiality and authentication for many applications. The specification of a version of the TLS protocol is currently defined in Request for Comments (RFC) 2246, The TLS Protocol Version 1.0, the contents of which are herein incorporated by reference. It will be understood that other versions of TLS and other protocols, including those that may be developed in the future, might also be employed in variant embodiments.

The primary goal of the TLS protocol is to provide privacy and data integrity between two communicating applications. The protocol is composed of two layers: The TLS Record Protocol and the TLS Handshake Protocol. The TLS Record Protocol is layered on top of a reliable transport protocol (e.g. TCP), and ensures that a connection is private and reliable. The TLS Record Protocol uses symmetric cryptography for data encryption to ensure that the connection is private.

The TLS Record Protocol is used to encapsulate a number of higher-level protocols, such as the TLS Handshake Protocol. The TLS Handshake Protocol allows a client and a server to authenticate each other. The TLS Handshake Protocol also securely and reliably negotiates an encryption algorithm and cryptographic keys (also referred to as "encryption keys") before a higher-level application protocol transmits or receives data. The identity of the client and/or the server can be authenticated using public key cryptography techniques, and while the authentication can be made optional, it is generally required for at least one of the two peers (e.g. the server).

TLS is application protocol independent. TLS typically works between TCP/IP and application-layer protocols. Applications that make use of TLS, such as web servers and browsers, must be specially programmed to use TLS services. TLS service routines encrypt the data, and lower-level protocols subsequently deliver the encrypted data. For example, TLS is widely recognized as a protocol used for the secure HyperText Transfer Protocol (HTTPS) for Internet transactions between browsers and web servers. However, TLS may also be used for other application-level protocols, including for example, File Transfer Protocol (FTP), LDAP, SMTP, and others.

TLS is a communication-intensive protocol, and many message exchanges between the parties (e.g. server/client) are generally required in order to establish a secure connection. Furthermore, cryptographic operations, specifically public key operations, are generally processor-intensive. In particular, TLS often requires significant consumption of resources when secure connections are being established. Accordingly, when one of the parties is a mobile device (e.g. mobile device 100 of FIG. 1), the cost of routinely setting up TLS connections may be considered to be prohibitive or undesirable due to the resource constraints typically associated with such devices.

Under these and other circumstances, it may be desirable for a client that wishes to connect with a first server ("destination server") to employ a second server ("intermediate server") to establish a TLS connection with the destination server on its behalf. In this configuration, the intermediate server operates in a "proxy" mode in which it establishes the TLS connection with the destination server, and accordingly, relieves the client of much of the processing burden that would otherwise be required if the client were to establish the TLS connection on its own.

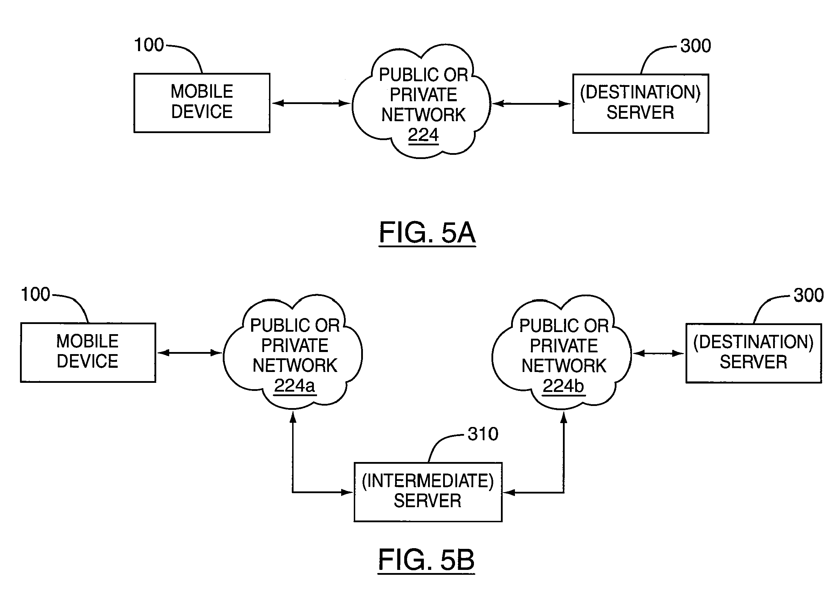

Consider, for example, the block diagrams of FIGS. 5A and 5B, which illustrate a number of example client/server system configurations. In these examples, the client is an application residing on a mobile device. However, the client may be an application residing on a different computing device in variant configurations.

In FIG. 5A, an application residing on mobile device 100 establishes a secure connection directly with a destination server 300 (e.g. a web server) over a public or private network 224 such as the Internet. While TLS is commonly used with web browsers to allow a user of a computing device, such as mobile device 100, to browse the Internet more securely, TLS is also a general-purpose protocol that can be used for any application, whenever authentication and data protection are advantageous.

In FIG. 5B, the application residing on mobile device 100 establishes a secure connection with the destination server 300 via an intermediate server 310 in accordance with embodiments described herein. Intermediate server 310 is employed to establish the secure connection on behalf of mobile device 100, when operating in the proxy mode.

In one system embodiment, mobile device 100 will be connected to intermediate server 310 by a pre-established secure connection between them. In this context, "pre-established" means that the connection between mobile device 100 and intermediate server 310 can be made secure before data is to be transmitted between mobile device 100 and the destination server 300 via intermediate server 310.

The pre-established secure connection between mobile device 100 and intermediate server 310 is made over a public or private network 224a. Intermediate server 310 may be, for example, a mobile data server (e.g. mobile data server 288 of FIG. 4), a message management server (e.g. message management server 272 of FIG. 4), or another server, which may also be referred to as a proxy server.

If the intermediate server 310 is a mobile data server 288 or message management server 272, it will typically already be adapted to compress and encrypt data that it pushes to mobile device 100 via the shared network infrastructure 224a (and via wireless network 200, shown in FIG. 4 but not explicitly in FIG. 5), and to decrypt and decompress data that it receives from the mobile device 100 in the course of the mobile device's normal operations. Data transmitted between intermediate server 310 and mobile device 100 is typically secured using an encryption algorithm that is more efficient than public key encryption algorithms (e.g., a symmetric encryption algorithm such as Triple DES or Advanced Encryption Standard (AES)). This may require the intermediate server 310 and mobile device 100 to both have access to a shared encryption key. The key (or data to generate the key) may be exchanged when mobile device 100 is initialized or synchronized, for example.

In accordance with at least one of the embodiments described herein, intermediate server 310 is employed to establish a secure connection (e.g. a TLS connection) with destination server 300 on behalf of mobile device 100 over a public or private network 224b. Network 224a and network 224b may be the same or a different network.

Accordingly, in this embodiment, mobile device 100 and intermediate server 310 will be coupled by way of a first secure connection (e.g. where data is secured using symmetric cryptographic techniques), while a second secure connection will be established between intermediate server 310 and destination server 300 (e.g. where data is secured using asymmetric or public key cryptographic techniques), such that mobile device 100 will be indirectly connected to destination server 300.

In another embodiment, once intermediate server 310 establishes a secure connection with destination server 300, intermediate server 310 will also maintain the secure connection such that data can be transmitted from destination server 300 to mobile device 100 through intermediate server 310, and such that data can be transmitted from mobile device 100 to destination server 300 through intermediate server 310. For security reasons, this approach may not always be desirable since data being transmitted to and from mobile device 100 will be visible to intermediate server 310. However, where intermediate server 310 is sufficiently trusted by a user of mobile device 100, the security risk presented may be considered negligible.

In this embodiment, after the intermediate server 310 establishes the secure connection with destination server 300 on behalf of mobile device 100, data subsequently transmitted between destination server 300 and mobile device 100 via intermediate server 310 may be subject to processing by intermediate server 310. For example, intermediate server 310 can pre-process the data carried by the secure connection established with destination server 300 before sending the data to mobile device 100. For example pre-processing may include including compressing or filtering the data. This may allow intermediate server 310 to optimize data transmissions for wireless environments by reducing bandwidth, for example.

Consider again, by way of example, the TLS protocol. TLS authenticates servers and clients to prove the identities of parties engaged in secure communication through the use of certificates and public or private keys.
In the establishment of a TLS connection, the destination server typically always authenticates its identity to the client residing on a computing device. However, the client may not need to authenticate with the destination server, depending on the application. Generally, unless the destination server requires authentication of a user of the computing device, users do not need to be known to a destination server before a TLS connection with the destination server can be established. However, if the application does require mutual authentication (i.e. authentication of the client and the server), then at one point in the establishment of the TLS connection, the client will need to authenticate itself by producing a digital signature generated with a private key.

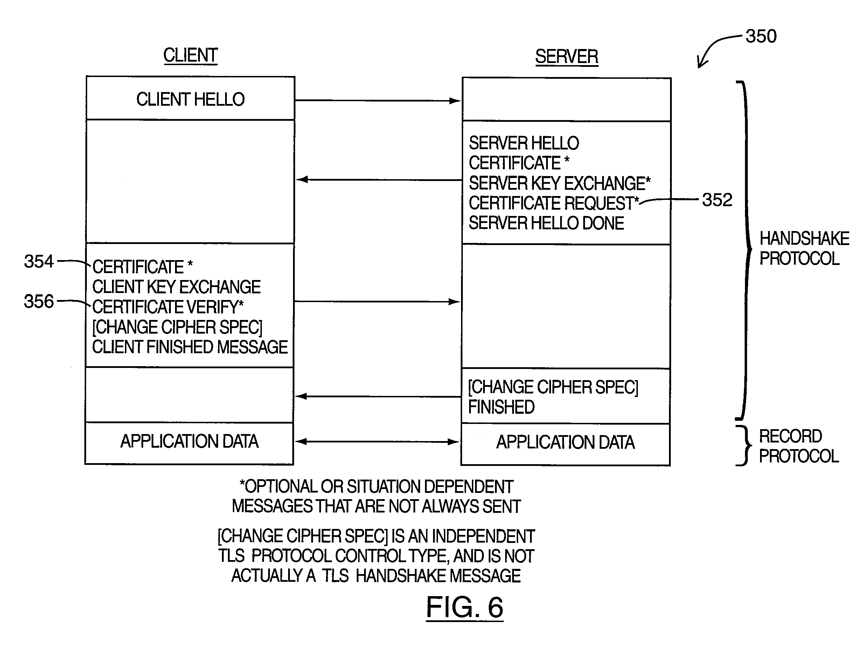

Referring to FIG. 6, a flow diagram illustrating the flow of messages in a full handshake in accordance with a TLS protocol is shown generally as 350. Further details of the messages generated and transmitted in accordance with the TLS protocol are provided in RFC 2246.

In general, the TLS Handshake Protocol is used to negotiate secure attributes of a data transfer session. Once hashing and encryption keys are ready for use, the TLS Record Protocol is used to secure application data using the keys created in the handshake process.

Typically, certificates are used for authentication in the TLS protocol. As noted earlier, a certificate is a digital form of identification that is usually issued by a certification authority (CA) and contains identification information. The certificate will also typically comprise a public key, a serial number, a digital signature of the issuer, and a validity period. For example, the Handshake Protocol may use an X.509 certificate to help prove the identity of a party that holds the certificate and the corresponding private key. A CA is a mutually trusted third party that confirms the identity of a party that requests a certificate, which is usually a user or a computer. The certificate binds that party's identity to a public key.

Referring to the exchange of messages illustrated in FIG. 6, if an intermediate server is employed to establish a TLS connection with a destination server on behalf of a client residing on a computing device, then for the purposes of establishing the TLS connection, the intermediate server would be deemed as the "client", while the destination server would be the "server" between which the messages are to be exchanged.

In this system configuration (see e.g. FIG. 5B), the destination server will present its certificates to the intermediate server so that the destination server can be authenticated. However, the destination server will not always require client authentication. If the destination server does not require client authentication, then the optional "Certificate Request" message 352 will not be sent.

However, the certificate request message 352 will be sent when client authentication is required. The certificate request message 352 may be sent when the destination server must confirm the identity of a "client", before an application residing on the destination server releases sensitive information (e.g. personal data) for example. The certificate request message 352 may include, for example, the type of certificate required (e.g. RSA, Digital Signature Standard (DSS)) and a list of acceptable certificate authorities.

When an intermediate server is employed to establish a TLS connection with a destination server on behalf of a client residing on a computing device (e.g. mobile device 100) and client authentication is required, the "client" to be authenticated is not the intermediate server but is instead the client residing on the computing device. More specifically, for many applications, it will be the identity of a specific user of the computing device on which the client (application) resides that is to be authenticated, before a secure connection to the destination server can be established.

If the destination server requests a client certificate, a certificate that contains the client's public key (e.g. the public key of the user of the computing device) can be sent to the destination server, along with the client's certificate list that identifies other related certificates needed to validate the client certificate. This data can be transmitted in the "Certificate" message 354 to the destination server in response to the destination server's certificate request. In this case, the certificate message 354 can be generated by the intermediate server, and since the data of this message comprises public information, this information can be pre-stored on the intermediate server for use as required with minimal security risk.

In message flow 350, however, when certificate message 354 is sent with a certificate that contains signing ability, then a "Certificate Verify" message 356 will also need to be sent to the destination server in order to provide explicit verification of a client certificate, in accordance with the TLS protocol. The client is authenticated to the destination server by using the private key associated with the client (e.g. a user's private key) to generate a digital signature. For example, the private key may be used to sign one or more hashes of all handshake messages either sent to or received from the client prior to the step of generating the certificate verify message 356. The server can then verify the signature with the public key that is associated with the client (e.g. the user's public key), to ensure that it was signed with the private key associated with the client (e.g. the user's private key).

When an intermediate server is employed to establish a TLS connection with a destination server on behalf of a client residing on a computing device (e.g. mobile device 100) and client authentication is required, a problem may arise when the certificate verify message 356 needs to be generated. The intermediate server will not generally have access to the private key needed to generate the requisite digital signature.

To address this problem, the client residing on the computing device (e.g. mobile device 100) may establish the TLS connection itself in situations where client authentication is required by the destination server. However, the benefits of employing an intermediate server would be lost.

Alternatively, the intermediate server may be provided with access to the private key of the user of the computing device upon which the client resides. This would allow the intermediate server to sign data on behalf of the user, and in particular, generate the digital signature required in a client authentication. By providing the intermediate server with access to its private key, however, the user may lose control over when and how his private key is to be used. In effect, the user has delegated signing capability to another party who can sign data on his behalf to produce digital signatures using his private key, without explicitly obtaining his consent. This can represent an unacceptable security risk to some users.

Embodiments described herein relate generally to a system and method for securely communicating with a destination server over a network via an intermediate server, in accordance with a protocol that, at least optionally, provides client authentication. More specifically, there is provided a system and method in which the intermediate server is adapted to establish a secure connection with the destination server on behalf of a client that resides on a computing device, and in which the user of the computing device can retain control over the use of his private key.

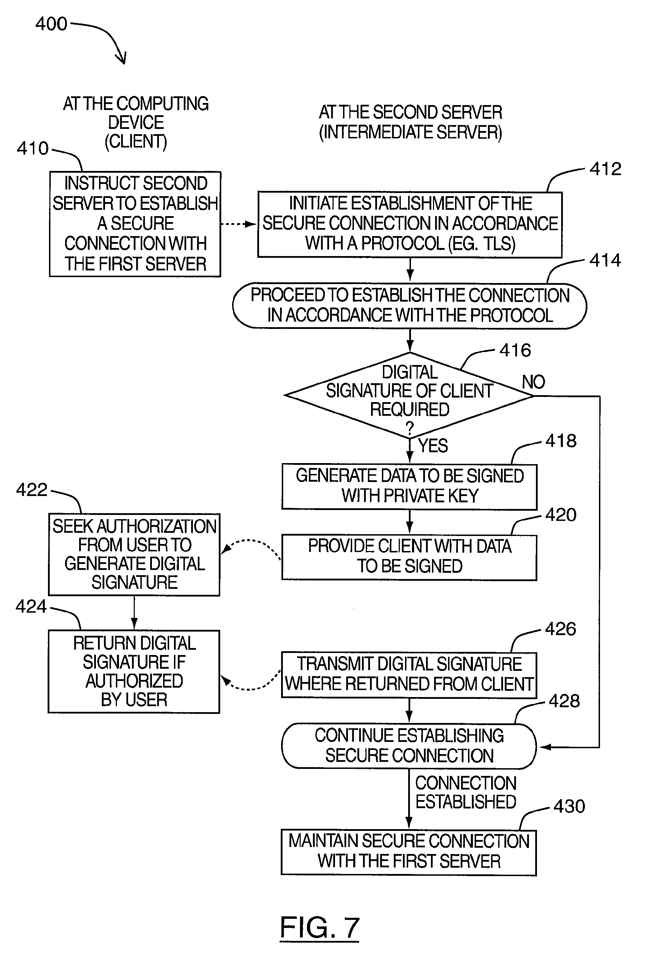

Referring to FIG. 7, a flowchart illustrating the steps of a method of securely communicating with a server over a network in accordance with a protocol providing client authentication, in at least one embodiment, is shown generally as 400.

Exemplary embodiments of method 400 are directed, at least in part, to a method of establishing a secure connection with a first server (also referred to herein as a "destination server", e.g., server 300 of FIG. 5B) in accordance with a protocol. The protocol may be TLS, for example. The protocol is to provide, at least optionally, authentication of a client residing on a computing device (e.g. mobile device 100) that is to engage in secure communication with the first server. A second server (also referred to herein as an "intermediate server", e.g. server 310 of FIG. 5B) is coupled to the computing device on which the client resides. The second server and the computing device of an embodiment of the system co-operate to establish the secure connection.

At step 410, the client instructs the second server to establish the secure connection with the first server. In one embodiment, the second server may be implemented as a proxy server adapted specifically to establish secure connections on behalf of the client. In another embodiment, the second server is more specifically a mobile data server (e.g. mobile data server 288 of FIG. 4). In another embodiment, the second server is more specifically a message management server (e.g. message management server 272 of FIG. 4). As noted earlier in the description of system embodiments and with reference to FIG. 5B, the second server may be coupled to the computing device on which the client resides by a pre-established secure connection between them.

At step 412, the second server initiates the establishment of a secure connection with the first server in accordance with a secure communications protocol, in response to the instruction received from the client at step 410. Where the protocol is TLS, this may comprise sending the first server a "Client Hello" message.

At step 414, the second server proceeds to establish the secure connection with the first server in accordance with the protocol generally in known manner, until a digital signature from the client is required by the first server in order to authenticate the client. The digital signature required is to be generated using a private key associated with the client.

It will be understood that the client is typically an application entity (e.g. a browser application) that resides on the computing device to which the second server is coupled. In a public key cryptography scheme, the private key associated with the client is an encryption key of a public key/private key pair. The private key associated with the client will typically be one that has been issued to a user of the computing device, although in some cases, a private key may be issued to the computing device itself.

In the process of establishing the secure connection, when it is determined that a digital signature from the client is required as shown at step 416, at step 418, the second server generates or formats the data that needs to be signed in order to generate the requisite digital signature.

Where the protocol is TLS, the data to be signed comprises one or more hashes of messages that the second server has sent to or received from the first earlier in the protocol. For example, the data to be signed may comprise a hash generated using one hashing algorithm, or it may comprise multiple hashes generating using different hashing algorithms concatenated together.

In a variant embodiment, the data that would need to be signed by the client may be generated by an application on a remote computing device coupled to the second server, and subsequently retrieved by the second server to be transmitted to the client for signing (at step 420) when needed.

At step 420, a digital signature is requested from the client, where the data to be signed that has been generated at the second server at step 418 is transmitted to the client for signing. Depending on the particular system implementation, the data transmitted to the client from the second server may be reformatted (e.g. compressed) and/or encrypted, for example.

If the data transmitted to the client from the second server has been compressed and/or encrypted, it will be decompressed and/or decrypted respectively when it is received at the computing device [step not shown].

At the computing device, as shown at step 422, the client seeks authorization to generate the requisite digital signature using the private key associated with the client (e.g. the user's private key) from a user of the computing device. The user is informed that a request is being made to use his private key to sign data, in order to generate a digital signature in response to a client authentication request. Since the user can allow or deny the request, the user is able to maintain control over the use of his private key.

Authorization to generate the requisite digital signature can be obtained from the user in a number of ways. For example, the user may be prompted with a simple Yes/No query to authorize the signing. In some instances, the user must also enter a password or passphrase to authorize the signing. Other techniques for obtaining user authorization may be employed.

In a variant embodiment, the user may implicitly authorize signings (e.g. from certain trusted servers or sites) by configuring the client so that user authorization need not be explicitly obtained from the user in each instance when a digital signature is required (i.e. the user authorization may be provided automatically in certain cases). In this variant embodiment, the user would still maintain a certain degree of control over the use of his private key, but at the expense of a potentially increased security risk. Similarly, whether user authorization needs to be explicitly obtained (e.g. for certain servers or sites) may also be determined in accordance with IT policy settings, which may be set by an administrator for example.

At step 424, if user authorization to generate the requisite digital signature is obtained, then the data transmitted to the client by the second server at step 420 is signed using the private key associated with the client. The private key associated with the client will generally be stored on the computing device upon which the client resides, although the private key may be retrieved from a remote store in variant system embodiments.

It will be understood that the data to be signed or the resultant digital signature may also be encoded using the private key associated with the client in variant embodiments.

The resultant digital signature is returned by the client to the second server at step 424. The returned digital signature does not comprise any private information. If user authorization was not obtained, however, then an error indicator may instead be returned to the second server [not shown].

Referring again to the second server, at step 426, the digital signature required by the protocol to authenticate the client is transmitted to the first server wherein the digital signature is the digital signature returned by the client at step 424. The digital signature as received from the client may be subject to processing (e.g. decompression, decryption) before it is transmitted to the first server. If the digital signature was not returned by the client, the second server may not successfully complete the establishment of the secure connection with the first server.

At step 428, the second server will continue to attempt to establish the secure connection in accordance with the protocol in known manner.

At step 430, once the secure connection is established between the first and second servers, the second server maintains the secure connection with the first server, where data received by the second server from the first server is transmitted to the client by the second server, and data received by the second server from the client is transmitted to the first server by the second server. The data to be sent between the client and the first server via the second server can be reformatted by the second server, in order to optimize data transmissions for example.

It will also be understood that not all of the data received by the client and the first server may be relayed to the first server and the client respectively through the second server in variant embodiments. For example, the second server may optionally filter the data that is to be transmitted between the parties.

In respect of the embodiments described herein, it will be understood that the user of a computing device will need to place some trust in the second (intermediate) server. For example, the user must trust that the intermediate server will provide the correct data for the client to sign, and that the secure connection being established by the intermediate server is with the proper destination server. When the intermediate server is used to maintain an established secure connection, the user must also trust that the encryption, decryption, reformatting, or other processing of data performed by the intermediate server is being done properly. While employing an intermediate server to establish a secure connection with the destination server may not be as secure as having the client establish the secure connection with the destination server directly itself (e.g. FIG. 5A), the use of the intermediate server to establish the secure connection may afford significant benefits in terms of efficiency with respect to the use of bandwidth and processing power, which may be particularly advantageous when the client resides on a mobile device.

At least some of the embodiments described above allow the benefits of using an intermediate server to establish secure connections with a destination server to be attained, while ensuring that the user is provided with the opportunity to explicitly authorize the generation of a digital signature using his private key before the digital signature is produced. The signature generation portion of a secure communications protocol can therefore be "proxied" back to the client by the intermediate server to provide greater security. Unlike schemes that would require the user to delegate signing capabilities to another party, in these embodiments, the user can retain full control over the use of his private key. In particular, the user can be informed of when his private key is being used in order to sign data in response to a client authentication request, and in one embodiment, may even need to enter additional information (e.g. a password or passphrase) to authorize the signing operation. In this way, the user can be reasonably assured that his private key is not being used for any purpose other than to authenticate himself to a destination server.

Furthermore, since the signature generation portion of a protocol can be "proxied" back to the client by the intermediate server, embodiments described herein may be implemented in association with existing protocols, such as TLS. A TLS destination server adapted to verify digital signatures received in response to client authentication requests need not be aware of whether the signature was submitted by the client directly or indirectly through an intermediate server, and changes to the underlying applications executing on either the client or the destination server need not be specially modified to accommodate the role of the intermediate server in assisting the client in the establishment of a TLS connection.

The steps of a method of securely communicating with a server over a network in accordance with a protocol providing client authentication in an embodiment described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A system for securely communicating with a first server (300) over a network (224) in accordance with a protocol, wherein the protocol provides authentication of clients that are to engage in secure communication with the first server (300), the system comprising:
a client residing on a computing device, wherein a private key is associated with the client;
a second server (310) coupled to the computing device on which the client resides;
wherein the second server (310) is adapted to establish a secure connection with the first server (300) in accordance with the protocol and is further adapted such that, when the first server (300) requires a digital signature that has been generated using the private key associated with
the client in order to authenticate the client, the second server (310)
requests the digital signature from the client wherein the second server provides the client with data to be signed using the private key, and
transmits the digital signature to the first server if the client returns the digital signature generated using the private key to the second server.

2. The system of claim 1, wherein the second server (310) is adapted to generate the data to be signed using the private key.

3. The system of claim 1 or claim 2, wherein the data to be signed using the private key comprises one or more hashes generated from at least one of: data transmitted by the second server (310) to the first server (300) while establishing the secure connection, and data received by the second server (310) from the first server (300) while establishing the secure connection.

4. The system of any one of the preceding claims, wherein the client is adapted to return the digital signature generated using the private key to the second server (310) only after authorization to generate the digital signature is received from a user of the computing device.

5. The system of any one of the preceding claims, wherein the second server (310) is adapted to establish the secure connection with the first server (300) in accordance with the protocol only after being instructed to do so by the client.

6. The system of any one of the preceding claims, wherein the second server is further adapted to maintain the secure connection with the first server (300) after the secure connection is established whereby data received by the second server (310) from the first server (300) is transmitted to the client by the second server (310), and data received by the second server (310) from the client is transmitted to the first server (300) by the second server (310).

7. The system of any one of the preceding claims, wherein the second server is coupled to the computing device by a pre-established secure connection therebetween.

8. The system of any one of the preceding claims, wherein the protocol is a Transport Layer Security protocol.

9. The system of any one of the preceding claims, wherein the client is an application entity residing on the computing device.

10. The system of any one of the preceding claims, wherein the computing device is a mobile device (100).

11. The system of any one of the preceding claims, wherein the second server is a mobile data server (288).

12. An apparatus for securely communicating with a server (300) over a network (224) in accordance with a protocol, wherein the protocol provides authentication of clients that are to engage in secure communication with the server (300), and wherein:
the apparatus (310) is coupled to a computing device on which a client resides, wherein a private key is associated with the client;
the apparatus (310) is adapted to establish a secure connection with the server (300) in accordance with the protocol and is further adapted such that, when the server (300) requires a digital signature that has been generated using the private key associated with the client in order to
authenticate the client, the apparatus (310)
requests the digital signature from the client wherein the apparatus (310) provides the client with data to be signed using the private key, and
transmits the digital signature to the server if the client returns the digital signature generated using the private key to the apparatus (310).

13. The apparatus of claim 12, wherein the apparatus (310) is a mobile data server (288).

14. A device for securely communicating with a first server (300) over a network (224) in accordance with a protocol, wherein the protocol provides authentication of clients that are to engage in secure communication with the first server (300), and wherein:
a client resides on the device, wherein a private key is associated with the client;
a second server (310) is coupled to the device, wherein the second server (310) is adapted to establish a secure connection with the first server (300) in accordance with the protocol such that, in operation, when the first server (300) requires a digital signature that has been generated using the private key associated with the client in order to authenticate the client, the second server (310)
requests the digital signature from the client wherein the second server provides the client with data to be signed using the private key, and
transmits the digital signature to the first server if the client returns the digital signature generated using the private key to the second server.

15. The device of claim 14, wherein the device is a mobile device (100).

16. A method of securely communicating with a first server (300) over a network (224) in accordance with a protocol, wherein the protocol provides authentication of clients that are to engage in secure communication with the first server (300), and wherein a client residing on a computing device and a second server (310) coupled to the computing device on which the client resides co-operate to perform the steps of the method, the method comprising:
the second server (310) initiating (412) establishment of a secure connection with the first server (300) in accordance with the protocol;
the second server (310) establishing (414) the secure connection with the first server (300) in accordance with the protocol such that, in operation, when the first server (300) requires a digital signature that has been generated using a private key associated with the client in order to
authenticate the client, the second server (310) performs steps comprising
requesting the digital signature from the client wherein the second server (310) provides (420) the client with data to be signed using the private key, and
transmitting (426) the digital signature to the first server (300) if the client returns the digital signature generated using the private key to the second server (310).

17. The method of claim 16, further comprising the step of the second server (310) generating (418) the data to be signed using the private key in the establishing of the secure connection.

18. The method of claim 16 or claim 17, wherein in the establishing of the secure connection, the client performs steps comprising:
seeking authorization (422) to generate the digital signature using the private key from a user of the computing device, and
returning (424) the digital signature generated using the private key to the second server (310) only if the authorization is received from the user.

19. The method of any one of claims 16 to 18, further comprising the step of the client instructing the second server (310) to establish the secure connection with the first server (300), wherein the second server performs the initiating (412) and establishing (414) steps in response thereto.

20. The method of any one of claims 16 to 19, further comprising the step of the second server (310) maintaining (430) the secure connection with the first server (300) after the secure connection is established, wherein the maintaining step (430) comprises the second server (310) transmitting data received thereby from the first server (300) to the client, and the second server (310) transmitting data received thereby from the client to the first server (300).

21. A computer program product comprising a computer-readable medium having stored thereon a set of instructions, said set of instructions, which when executed by a processor of a computing device, apparatus or system implement the method of any one of claims 16 to 20.
